# FASCICULE DE BREVET EUROPEEN

(11) **EP 1 174 756 B1**
(45) Date de publication et mention de la délivrance du brevet: **09.09.2015**
(21) Numéro de dépôt: 00202624.3
(22) Date de dépôt: 21.07.2000
(51) Int. Cl.: G02F 1/1335, G02F 1/157, G04C 9/06

(54) **Ensemble d'affichage comportant une cellule électro-optique et une cellule photovoltaique**
Anzeigeeinheit mit einer elektrooptischen und einer photovoltaischen Zelle
Display assembly comprising an electro-optical and a photovoltaic cell

(43) Date de publication de la demande: 23.01.2002
(73) Titulaire: ETA SA Manufacture Horlogère Suisse, 2540 Grenchen (CH)
(72) Inventeur: Platz, Rainer, 2000 Neuchâtel (CH); Saurer, Eric, 2022 Bevaix (CH); Basturk, Naci, 2073 Enges (CH)
(74) Mandataire: Ravenel, Thierry Gérard Louis

(56) Documents cités:
- EP-A- 0 814 365
- US-A- 5 457 057
- US-A- 5 963 282

## Description

La présente invention concerne un ensemble d'affichage comportant une cellule photovoltaïque et une cellule électro-optique disposée devant la cellule photovoltaïque et capable de présenter des zones transparentes pour transmettre de la lumière incidente à la cellule photovoltaïque.

Dans le brevet US 4 095 217, il est décrit un ensemble d'affichage de ce genre, utilisable dans des appareils électroniques telles que des calculatrices et des montres digitales. Cet ensemble comporte un affichage à cristaux liquides nématiques pourvu d'un polariseur sur ses deux faces et d'un filtre sur le polariseur avant, afin de réduire la réflexion de la lumière ambiante et d'améliorer le contraste. Une cellule solaire, par exemple au silicium, est appliquée au dos du polariseur arrière et sert de réflecteur pour l'affichage à cristaux liquides, tandis que la part non réfléchie de l'énergie lumineuse atteignant la cellule solaire est susceptible d'être convertie en énergie électrique pour faire fonctionner l'appareil.

Un inconvénient d'un tel agencement est que la couleur de la lumière réfléchie par les cellules solaires de ce genre n'est pas plaisante. En particulier, les cellules photovoltaïques au silicium présentent une couleur terne et sombre, notamment brunâtre ou grisâtre, ce qui convient mal aux applications dans lesquelles l'esthétique joue un rôle important comme dans l'horlogerie.

Pour y remédier, il a été proposé d'interposer un filtre entre un affichage à cristaux liquides et une cellule photovoltaïque, afin que la lumière réfléchie vers l'affichage présente une couleur voulue. Par exemple dans l'abrégé publié dans la base de données Espacenet au sujet de la demande de brevet JP 60-147720 A, un filtre à réflexion sélective est disposé au dos de l'affichage à cristaux liquides et réfléchit vers celui-ci la lumière d'une longueur d'onde spécifique, par exemple bleue. La lumière transmise à travers le filtre est absorbée par une couche absorbante qui peut être une cellule solaire. La lumière ayant traversé des zones du cristal liquide qui sont en mode transparent est réfléchie vers le bas, de sorte que ces zones apparaissent en noir à l'observateur. Par contre, dans les zones du cristal liquide qui sont en mode de dispersion, la lumière bleue réfléchie est dispersée par ces zones, qui apparaissent donc à l'observateur en bleu sur un fond noir. Cette structure de l'affichage à cristaux liquides a l'avantage de permettre un libre choix de la couleur des zones diffusantes de l'affichage, mais le fond est toujours noir. De plus, une telle couche filtrante dans l'affichage implique une certaine absorption d'énergie lumineuse, ce qui réduit la part d'énergie pouvant être convertie en électricité. D'autre part, dans les cas où l'on désire faire apparaître d'autres éléments derrière l'affichage à cristaux liquides, par exemple des aiguilles de montre dans le cas d'un affichage combiné analogique et digital, ces éléments apparaîtront colorés par soustraction de la lumière réfléchie par le filtre.

La demande de brevet EP 0 814 365 divulgue également des ensembles d'affichage comprenant, de haut en bas, une cellule à cristaux liquides ayant des régions commutables entre un état transparent et un état diffusant, une couche réfléchissante ayant une réflectivité de 5 % à 50 % et réfléchissant une couleur spécifique dans le domaine visible, et une couche absorbante qui peut être une cellule solaire. Pour transmettre assez d'énergie à la cellule solaire, la couche réfléchissante a une faible absorption et transmet la majorité de la lumière dans le reste du domaine visible et dans l'infrarouge. Elle peut être formée par un film diélectrique comprenant de 25 à 30 couches ou par un film métallique. Ces films peuvent dans certains cas être appliqués sur la cellule solaire. Toutefois cette structure, comme dans le cas de la publication JP 60-147720 A, nécessite de placer des couches semi-réfléchissantes entre les deux cellules et présente les mêmes inconvénients.

La présente invention évite ces inconvénients grâce à un ensemble d'affichage selon la revendication 1 annexée.

En d'autres termes, c'est la cellule photovoltaïque elle-même, par une ou plusieurs de ses couches fonctionnelles, qui réfléchit de la lumière de couleur désirée en direction de la cellule électro-optique, sans qu'il soit nécessaire d'interposer d'autres couches filtrantes ou réfléchissantes entre les deux cellules.

En conséquence, on peut choisir la couleur dans laquelle l'observateur verra les zones transparentes de la cellule électro-optique, constituant en général la couleur de fond de l'affichage. Les autres zones de l'affichage auront leur couleur propre, déterminée par la nature et la structure de la cellule électro-optique et pouvant être nettement contrastée par rapport à la couleur du fond. Tout élément interposé entre la cellule électro-optique et la cellule photovoltaïque sera vu avec sa couleur propre dans les zones transparentes de l'affichage et on pourra donc lui donner une couleur assortie à celle du fond, pour obtenir l'effet esthétique désiré. La réflexion sur la cellule photovoltaïque peut être de type spéculaire, mais on peut aussi prévoir une réflexion légèrement diffusante pour éliminer des effets optiques indésirables.

Dans une forme de réalisation avantageuse de l'invention, la réflexion desdites longueurs d'ondes prédéterminées est une réflexion sur un filtre réflectif multicouche comprenant une électrode supérieure transparente de la cellule photovoltaïque. En utilisant un tel mode de réflexion à l'aide d'une électrode transparente faisant partie intégrante de la cellule photovoltaïque, on peut obtenir une réflexion colorée sans ajouter aucun élément optique susceptible d'absorber de la lumière, si bien qu'un maximum d'énergie lumineuse est à disposition pour la conversion en énergie électrique. Cet aspect est particulièrement important dans les appareils électriques portables utilisant un accumulateur d'énergie électrique et devant présenter une longue autonomie, comme c'est le cas dans les montres.

Dans une autre forme de réalisation de l'invention, la cellule photovoltaïque comporte une électrode supérieure métallique semi-transparente, qui forme ledit réflecteur coloré.

D'autres caractéristiques et avantages de la présente invention apparaîtront dans la description suivante de divers modes de réalisation, présentés à titre d'exemples non limitatifs en référence aux dessins annexés, dans lesquels :
- la figure 1 est une vue en coupe d'une montre-bracelet équipée d'un ensemble d'affichage comprenant une cellule d'affichage à cristaux liquides et une cellule photovoltaïque à semi-conducteur, l'affichage à cristaux liquides étant dans un premier état de commutation où il est entièrement transparent;

- la figure 2 est une vue de dessus de la montre-bracelet représentée sur la figure 1;
- les figures 3 et 4 sont des vues analogues à celles des figures 1 et 2, l'affichage à cristaux liquides étant dans un deuxième état de commutation dans lequel il affiche une information en caractères opaques réfléchissants sur un fond coloré,
- la figure 5 est une vue schématique en coupe partielle d'un premier mode de réalisation d'une cellule photovoltaïque au silicium servant de réflecteur conformément à l'invention et formant le cadran de la montre représentée aux figures 1 à 4,
- la figure 6 est une vue analogue à la figure 5, représentant un deuxième mode de réalisation de la cellule photovoltaïque,
- la figure 7 est une vue analogue à la figure 6, représentant un troisième mode de réalisation de la cellule photovoltaïque,
- la figure 8 représente la réflectance en fonction de la longueur d'onde, obtenue avec la structure illustrée par la figure 5 pour différents couples d'épaisseurs du silicium et de l'électrode supérieure transparente,
- la figure 9 représente les coordonnées RGB de la lumière réfléchie pour les structures dont le spectre de réflexion est représenté à la figure 8,
- la figure 10 représente la réflectance en fonction de la longueur d'onde, obtenue avec les structures illustrées respectivement par les figures 5, 6 et 7, pour un couple sélectionné des épaisseurs respectives du silicium et de l'électrode supérieure transparente,
- la figure 11 représente le spectre d'absorption d'un colorant utilisé dans un cas représenté aux figures 7 et 10 (courbe 86), et
- les figures 12 à 14 représentent schématiquement trois autres exemples d'ensembles d'affichage selon l'invention, sous la forme d'une coupe verticale simplifiée et d'une vue frontale de l'affichage.

La description de l'invention va être faite dans le cadre d'une application à une pièce d'horlogerie telle qu'une montre-bracelet. Il va toutefois de soi que l'invention n'est pas limitée à cette application et qu'elle pourra être avantageusement utilisée dans le cadre de toute autre application nécessitant l'affichage d'informations, notamment des appareils électroniques portables tels que des calculatrices, des téléphones, des jeux électroniques, des instruments de mesure, etc., ou des appareils fixes tels que des écrans d'ordinateurs ou des panneaux publicitaires ou routiers.

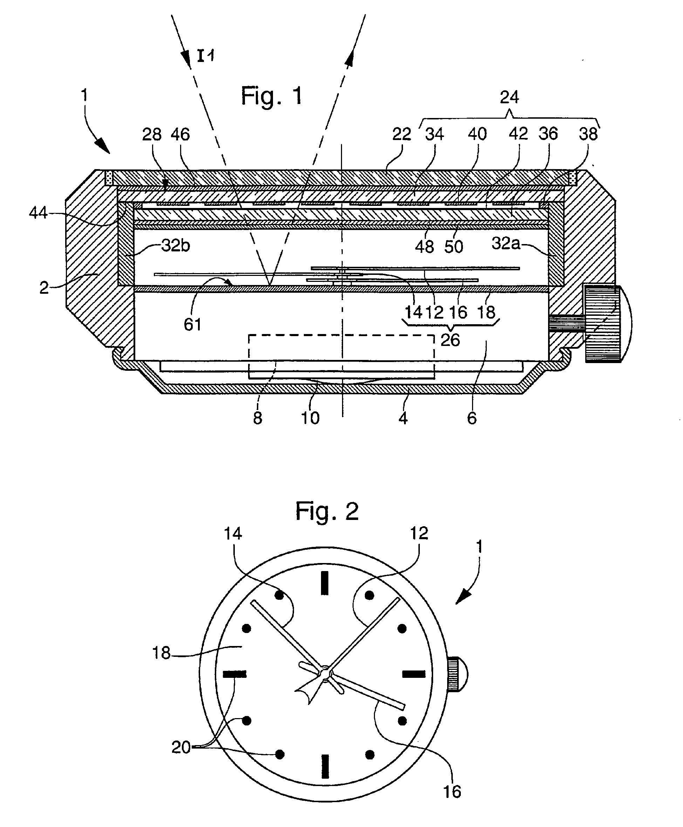

En se référant aux figures 1 à 4, on voit une pièce d'horlogerie du type montre-bracelet 1 qui comprend classiquement une boîte 2 munie d'un fond 4 dans laquelle sont disposés un mouvement d'horlogerie électronique 6 et un accumulateur électrique 8 qui prend appui sur le fond 4 par l'intermédiaire d'un ressort de contact 10. Le mouvement 6 comprend des circuits électroniques garde-temps associés, via un circuit de commande, à un dispositif d'entraînement (non représenté) d'une aiguille des secondes 12, d'une aiguille des minutes 14 et d'une aiguilles des heures 16. Ces aiguilles 12, 14 et 16 se déplacent au-dessus d'un cadran 18 qui porte des index d'heures 20 visibles sur la figure 2. La boîte 2 est de préférence fermée de façon classique par une glace 22 recouvrant la totalité de l'ensemble d'affichage.

La montre 1 comprend en outre un ensemble d'affichage comprenant deux dispositifs d'affichage superposés respectivement supérieur 24 et inférieur 26. Dans l'exemple représenté, le dispositif d'affichage inférieur 26 comprend des moyens d'affichage de grandeurs temporelles, en particulier des moyens d'affichage analogiques de l'heure formés par les aiguilles 12, 14, 16 et le cadran 18.

Le cadran 18 est formé par un substrat rigide dont la face supérieure est recouverte par une cellule photovoltaïque 61 (dite aussi cellule solaire) ou par une batterie de plusieurs de telles cellules juxtaposées et connectées en série, pour charger l'accumulateur 8 par l'entremise d'un circuit de charge incorporé au mouvement 6. Cette cellule ou batterie de cellules sert de réflecteur pour le dispositif d'affichage supérieur 24. La structure du cadran sera décrite plus loin.

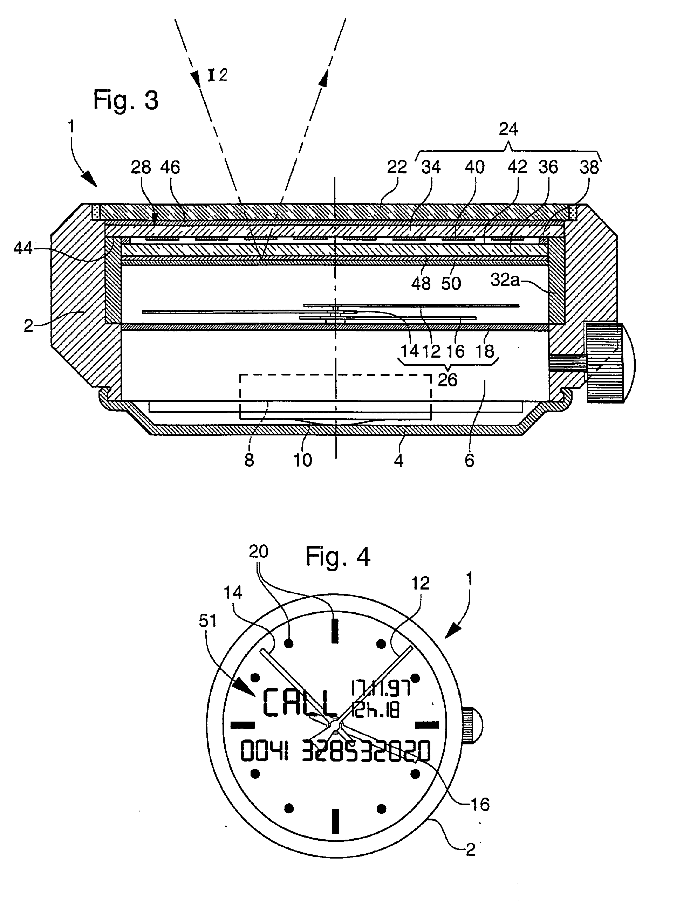

Le dispositif d'affichage supérieur 24 peut être, entre autres, l'un quelconque des types décrits dans les demandes de brevets EP 0 926 574 et EP 0 939 331 qui sont citées ici à titre de références. Il comprend une cellule électro-optique 28, par exemple à cristaux liquides, et s'étend entre le dispositif d'affichage inférieur 26 et la glace 22. Dans l'exemple représenté, ce dispositif d'affichage supérieur 24 recouvre la totalité de la surface du cadran 18. Il va de soi que, selon une variante de réalisation, le dispositif d'affichage supérieur 24 peut former la glace 22 de la montre 1. Le dispositif d'affichage supérieur 24 est agencé de sorte que la cellule électro-optique 28 soit transparente dans un premier état de commutation pour rendre visibles les informations affichées par le dispositif d'affichage inférieur 26, à savoir les aiguilles 12, 14 et 16 et le cadran 18. Une telle configuration de l'ensemble d'affichage selon l'invention est représentée sur les figures 1 et 2. D'autre part, le dispositif d'affichage supérieur 24 est agencé afin que la cellule électro-optique 28 affiche une information, par exemple du type alphanumérique, dans un deuxième état de commutation. Une telle configuration de l'ensemble d'affichage selon l'invention est représentée sur les figures 3 et 4.

La commutation de la cellule électro-optique 28 du premier état au deuxième état et inversement est assurée par des moyens de commande (non représentés) intégrés au mouvement 6, ces moyens de commande étant reliés à la cellule 28 par l'intermédiaire de connecteurs classiques 32a, 32b pour lui fournir une tension de commande. Dans l'exemple représenté, les connecteurs 32a, 32b forment également un rehaut disposé entre le bord supérieur du cadran 18 et le bord inférieur de la cellule 28.

La cellule 28 peut être une cellule électro-optique à cristaux liquides de type absorbant, diffusant ou réflectif dans le deuxième état de commutation.

Selon un mode de réalisation préféré, la cellule électro-optique 28 est une cellule à cristaux liquides du type nématique en hélice (TN ou STN). Cette cellule 28 comprend un substrat avant 34 transparent, un substrat arrière 36 transparent et un cadre de scellement 38 délimitant avec les substrats 34 et 36 une cavité dans laquelle se trouve une couche de cristaux liquides. Les faces mutuellement opposées des substrats 34 et 36 comportent des électrodes transparentes 40 et 42, réalisées par exemple en oxyde d'indium/étain (ITO). Dans l'exemple illustré, le substrat avant 34 porte des électrodes 40 configurées en segments permettant d'afficher des caractères alphanumériques, tandis que le substrat arrière 36 porte une électrode 42 s'étendant sur toute sa surface. Les électrodes 40 et 42 sont reliées aux connecteurs 32a et 32b par l'intermédiaire de plages de contact 44 situées à l'extérieur de la cavité. La cellule 28 comprend en outre, du côté de la glace 22, un polariseur linéaire 46 et, du côté du cadran 18, une lame quart d'onde 48 associée à un film cholestérique 50.

L'ensemble formé de la lame quart d'onde 48 et du film cholestérique 50 pourrait être remplacé par un polariseur réflectif par exemple à large bande du type DBEF ou RDF-C, fabriqués par 3M, ou d'un type réflectif sélectif pour colorer les segments des caractères ou symboles à afficher.

De préférence, le polariseur 46 est du type à efficacité de polarisation et transmission élevée tel que, par exemple, le polariseur commercialisé par la société Sanritsu, Japon sous la référence LLC₂5618SF.

On notera également que, selon une variante, la cellule à cristaux liquides 28 peut être remplacée par un dispositif d'affichage en couleurs tel que celui décrit dans le brevet EP 0 600 349 qui est également cité ici à titre de référence.

Selon une autre variante, on peut choisir un film cholestérique 50 capable de réfléchir une longueur d'onde ou une partie du spectre visible correspondant à une couleur prédéterminée. On peut de cette façon choisir d'afficher les informations dans une couleur complémentaire à celle du cadran et ainsi améliorer le contraste et l'esthétique de l'ensemble d'affichage.

Lorsque l'on applique une tension entre l'électrode 42 et certaines des électrodes 40, on fait passer les segments se trouvant entre ces électrodes 40, 42 d'un état transparent à un état absorbant, réflectif ou diffusant.

La cellule 28 étant une cellule à cristaux liquides de type nématique en hélice à 90°, le polariseur 46 est du type linéaire classique, la lame quart d'onde 48 polarise circulairement la lumière à droite, et le film cholestérique 50 est un film à hélice à gauche. Ainsi, la cellule 28 est totalement transparente (figures 1 et 2) dans le premier état de commutation, c'est-à-dire lorsque aucune tension n'est appliquée aux bornes des électrodes 40, 42 (état non commuté). Cet état est symbolisé par le rayon de lumière I1 sur la figure 1, où l'on voit qu'il traverse la cellule 28 et est réfléchi par le cadran 18. La cellule 28 est d'autre part absorbante, réfléchissante ou diffusante dans ses régions commutées (figures 3 et 4) dans le deuxième état de commutation, c'est-à-dire lorsqu'une tension est appliquée aux bornes des électrodes 40, 42 (état commuté). Ce deuxième état est représenté par le rayon de lumière I2 sur la figure 3 où l'on voit qu'il est réfléchi par la cellule 28. On peut ainsi afficher des informations 51 en opaque sur fond réfléchissant, l'opacité étant déterminée par la couleur réfléchie par le film cholestérique 50, et le fond étant déterminé par la couleur du cadran 18.

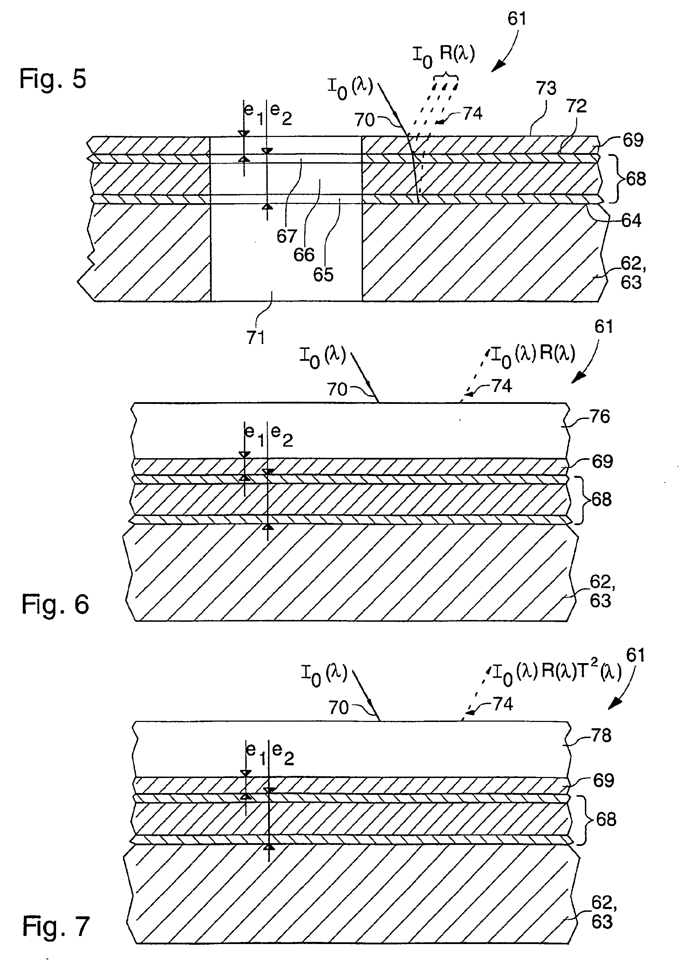

Le cadran 18, qui sert en particulier de filtre réflectif multicouche pour renvoyer de la lumière colorée vers l'affichage à cristaux liquides de la montre représentée aux figures 1 à 4, est formé de préférence par une cellule photovoltaïque 61 d'un des types représentés aux figures 5 à 7. Ces types de cellules sont décrits aussi dans la demande de brevet européen no. 99126005.0 qui n'était pas encore publiée à la date de dépôt de la présente demande.

En référence à la figure 5, la cellule photovoltaïque 61 comportant un substrat métallique 62 qui sert d'électrode inférieure 63 de la cellule. Le substrat 62 est de préférence en acier inoxydable, mais d'autres métaux tels que l'aluminium ou un substrat métallique recouvert de chrome peuvent être utilisés. La surface supérieure 64 du substrat réfléchit la lumière, soit de façon spéculaire, soit de façon diffuse, afin d'améliorer le rendement énergétique. Dans un mode de réalisation préféré, le substrat 62 supporte un empilement de trois couches minces 65, 66 et 67 d'un matériau semi-conducteur, respectivement de types n, i et p ou inversement, pour former la partie active d'une photodiode à jonction n-i-p ou p-i-n, indiquée par la référence 68. Le matériau semi-conducteur est de préférence du silicium amorphe hydrogéné (a-Si:H). Sur l'empilement des couches de silicium est appliquée une électrode supérieure transparente 69 formée d'une couche mince d'oxyde conducteur transparent (TCO), par exemple une couche d'oxyde d'indium dopée à l'étain (ITO), ou d'oxyde d'étain dopé à l'antimoine, ou d'oxyde d'étain dopé au fluor, ou d'oxyde de zinc dopé à l'aluminium.

Dans la montre, le raccordement des électrodes 63 et 69 au circuit de charge de l'accumulateur électrique s'effectue de manière classique sur un bord du cadran 18 formé par la cellule 61. Un trou central 71 est ménagé à travers le cadran, pour laisser passer les arbres des aiguilles de la montre.

Bien entendu, l'électrode inférieure 63 pourrait comporter une couche métallique réfléchissante faite d'un matériau distinct du substrat 62, au cas où le matériau du substrat ne serait pas compatible avec la couche adjacente 65 de type n ou p. Une telle couche métallique peut constituer elle-même l'électrode 63 sur un substrat en matériau non conducteur.

Les couches de semi-conducteur et de TCO peuvent être déposées par des procédés classiques permettant une bonne maîtrise de l'épaisseur des couches, par exemple le dépôt en plasma RF pour le semi-conducteur et le dépôt par pulvérisation cathodique pour le TCO. Des exemples de procédés de fabrication en lots de cellules photovoltaïques de ce genre sont exposés en particulier dans les brevets US 4 485 125, US 5 457 057 et EP 0 948 060.

Les couches de silicium formant dans ce cas la partie active de photodiode 68 ont une épaisseur totale contrôlée e₂ et un indice de réfraction ayant une partie réelle d'environ 4. L'ITO formant l'électrode supérieure 69 a une épaisseur contrôlée e₁ et un indice de réfraction réel d'environ 2, l'absorption pouvant être négligée dans le cas particulier d'une telle couche. En conséquence, les deux couches 68 et 69 constitutives de la cellule photovoltaïque, disposées entre l'air et le substrat métallique, forment au moyen des interfaces 64, 72 et 73 un système optique interférentiel présentant une réflectance R(λ), où λ est la longueur d'onde de la lumière incidente 70, laquelle a une intensité spectrale I₀(λ). La lumière 74 réfléchie par la cellule 61, d'intensité spectrale I₀(λ)·R(λ), présente un aspect coloré dépendant de la réflectance R(λ) définie par les indices et épaisseurs des éléments du système interférentiel, qui constitue un filtre réflectif multicouche.

Connaissant les indices de réfraction des matériaux utilisés pour réaliser la cellule photovoltaïque, on peut calculer le spectre de réflexion interférentiel et les indices chromatiques correspondants en fonction des épaisseurs e₁ et e₂ et sélectionner les combinaisons d'épaisseurs fournissant les couleurs souhaitées, en tenant compte des contraintes imposées pour obtenir de bonnes caractéristiques électriques et mécaniques de la cellule photovoltaïque. Les mêmes opérations peuvent être faites avec d'autres matériaux, ayant d'autres indices de réfraction.

Bien entendu, il est possible d'utiliser d'autres semi-conducteurs à la place du silicium pour former la photodiode. On peut citer comme exemples les cellules photovoltaïques en couches minces à base de semi-conducteurs de la famille des chalcopyrites, comprenant notamment le Cu (In, Ga) Se₂ et le CuInS₂ (appelés aussi CIGS et CIS), et les cellules en couches minces à base de CdTe. L'indice de réfraction de ces matériaux est moins bien adapté à l'obtention d'une réflexion colorée par interférences, mais celle-ci reste possible.

La figure 6 représente un deuxième mode de réalisation dans lequel la structure de la cellule photovoltaïque 61 décrite en référence à la figure 5 est complétée par une couche de laque 76 transparente ou diffusante, appliquée sur l'électrode supérieure 69. Cette couche, ayant un indice de réfraction d'environ 1,5 et une épaisseur de l'ordre de 1 µm à quelques dizaines de µm, modifie la réflectance R(λ) du système interférentiel sous-jacent, du fait de son indice de réfraction différent de celui de l'électrode 69. De plus, une laque diffusante reproduit mieux l'aspect des cadrans traditionnels, en réduisant ou éliminant la dépendance angulaire des interférences dans la lumière réfléchie. Dans cet exemple, la laque de la couche 76 n'a pas d'absorption intrinsèque, c'est-à-dire pas de couleur propre. Comme son épaisseur est relativement grande, sa seule influence notable dans la réflexion interférentielle est celle de son indice de réfraction modifiant les conditions optiques à l'interface entre la laque et l'électrode supérieure 69. D'autre part la laque constitue une protection mécanique et chimique de l'électrode 69.

La figure 7 représente un troisième mode de réalisation dans lequel la structure de la cellule photovoltaïque 61 décrite en référence à la figure 5 est complétée par une couche de laque colorée 78, transparente ou légèrement diffusante, appliquée sur l'électrode supérieure 69. En plus de produire les mêmes effets que la couche de laque incolore 76, la laque colorée 78 présente un spectre de transmission T(λ) qui modifie la lumière réfléchie 74 dont le spectre est obtenu par convolution des spectres I₀(λ), R(λ) et T²(λ). Par ce moyen, il est possible de modifier la couleur de la lumière réfléchie, par exemple afin d'éliminer certaines composantes indésirables du spectre de réflexion interférentiel. Ceci permet d'obtenir un grand nombre de nuances de couleurs en utilisant les principes de la présente invention.

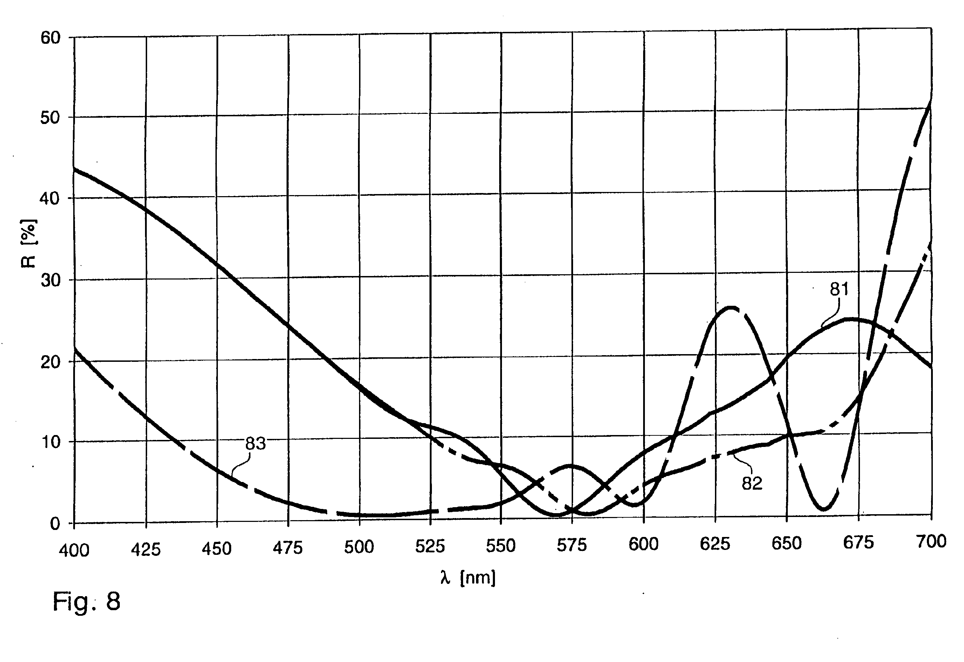

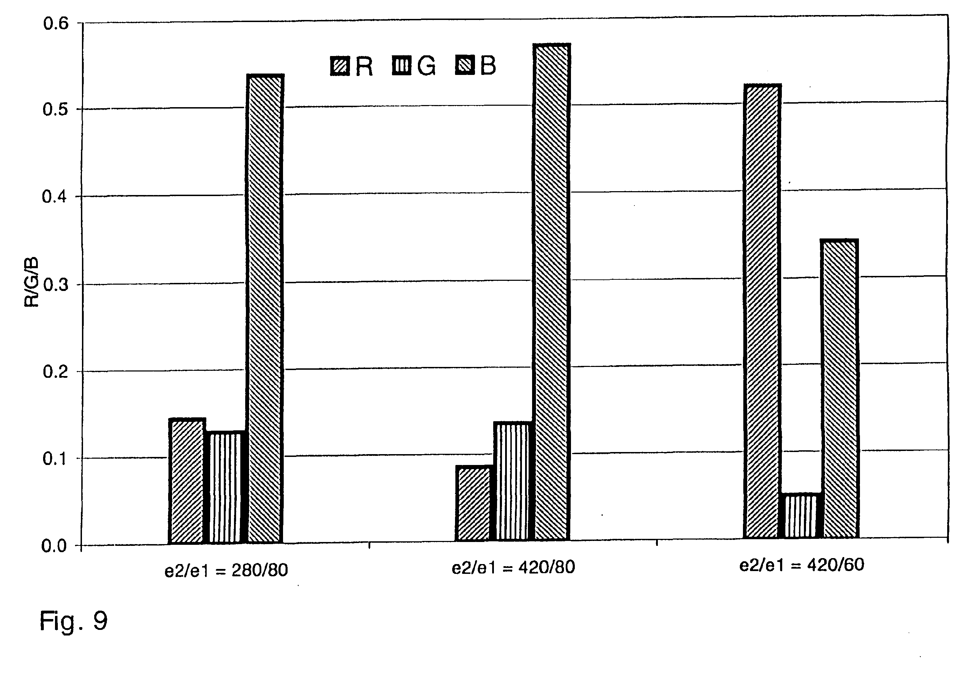

La figure 8 est une représentation spectrale de la réflectance R en fonction de la longueur d'onde λ pour trois exemples de cellules photovoltaïques ayant la structure illustrée par la figure 5, pour trois différents couples des épaisseurs e₁ et e₂. La figure 9 montre les coordonnées de couleurs R (rouge), G (vert) et B (bleu) pour ces trois exemples.

Le spectre 81, dessiné en trait continu, correspond à des épaisseurs e₂ = 280 nm de silicium et e₁ = 80 nm d'ITO. Selon la figure 9, la lumière réfléchie aura une couleur dominante bleue.

Le spectre 82, dessiné en trait mixte, correspond à la même valeur e₁ = 80 nm que dans l'exemple précédent, mais avec une valeur e₂ = 420 nm pour l'épaisseur de silicium. On voit que le spectre est ainsi modifié dans la région du vert et du rouge et que la lumière réfléchie aura aussi une couleur dominante bleue mais légèrement différente. En combinaison avec la photodiode 68 en a-Si:H, cet agencement est excellent du point de vue énergétique, parce que le miroir sélectif transmet dans ce cas plus de 90% de l'énergie lumineuse dans la gamme de longueurs d'ondes de 500 à 650 nm, gamme où le a-Si:H présente son meilleur rendement de conversion en énergie électrique. Dans la partie du spectre où la photodiode en a-Si:H fonctionne, environ 20% de la lumière est réfléchi et environ 80% est absorbé par la cellule photovoltaïque.

Le spectre 83, dessiné en trait interrompu, correspond à la même valeur e₂ = 420 nm que dans l'exemple précédent, mais avec une valeur e₁ = 60 nm au lieu de 80 nm pour l'épaisseur d'ITO. On voit que le spectre est ainsi fortement modifié dans plusieurs régions et que la lumière réfléchie aura une couleur dominante magenta. On en déduit que l'épaisseur de l'électrode en ITO a une importance prépondérante dans les exemples considérés.

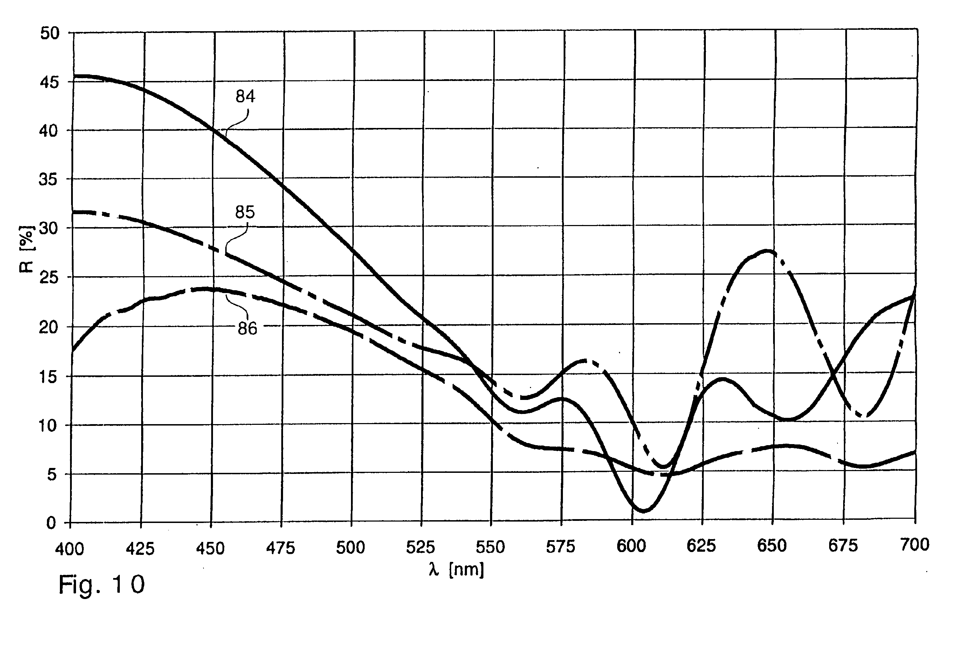

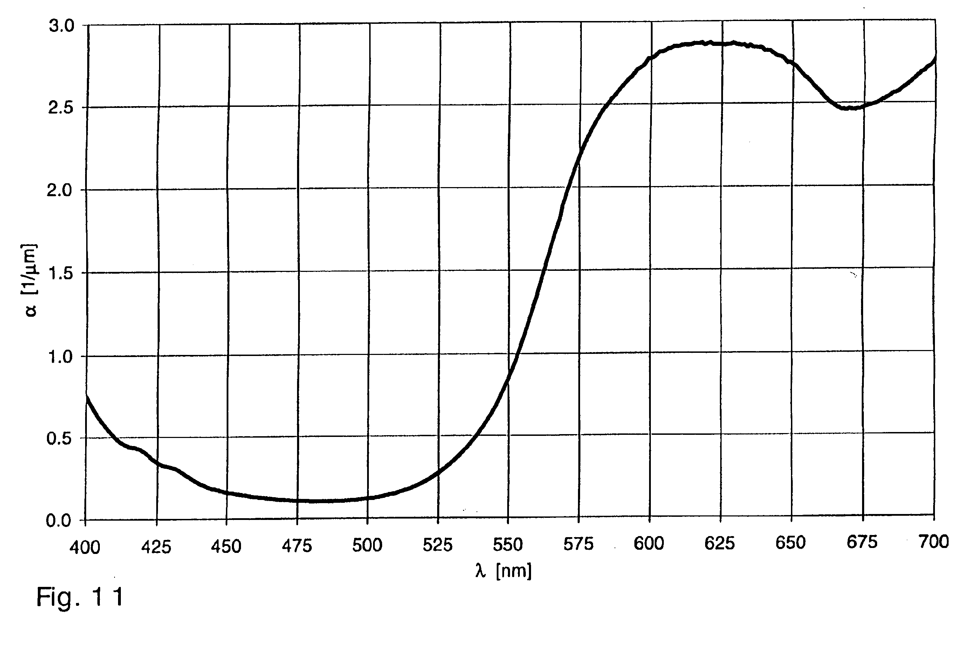

La figure 10 est une représentation spectrale de la réflectance R en fonction de la longueur d'onde λ pour trois exemples de cellules photovoltaïques ayant les structures illustrées respectivement par les figures 5, 6 et 7, pour un même couple de valeurs e₂ = 450 nm et e₁ = 90 nm des épaisseurs respectives de silicium et d'ITO. Le spectre 84, dessiné en trait continu, correspond à la version sans laque de la figure 5 et présente une forte dominante dans le bleu. Le spectre 85, dessiné en trait mixte, correspond à la version de la figure 6, avec une couche de laque incolore 76 d'indice 1,5 ayant une épaisseur de plusieurs µm. Par rapport au spectre 84, il est fortement réduit dans le bleu et plus marqué dans le vert et le rouge. Le spectre 86, dessiné en trait interrompu, correspond à la version de la figure 7, avec une couche de laque 78 mélangée à un colorant bleu dont le spectre d'absorption α(λ) est représenté à la figure 11, cette couche ayant une épaisseur de quelques µm. On voit que l'adjonction de colorant réduit la quantité de lumière réfléchie, surtout dans le jaune et le rouge.

La lumière colorée réfléchie par la ou chaque cellule photovoltaïque 61 du cadran 18 parvient inchangée à l'observateur après avoir retraversé les parties transparentes de l'affichage supérieur 24 à cristaux liquides. Elle donne ainsi la couleur générale du cadran 18, à l'exception des index et des aiguilles, dans le cas des figures 1 et 2. Dans le cas des figures 3 et 4, l'information 51 affichée par l'affichage supérieur 24 apparaît avec sa propre couleur, sur un arrière-plan vu par transparence et ayant la couleur du cadran. On peut toutefois envisager la disposition inverse, c'est-à-dire afficher les informations 51 par des régions transparentes de la cellule à cristaux liquides grâce à une disposition appropriée des électrodes 40. Les caractères ou symboles affichés auront alors la couleur du cadran, sur un fond dont la couleur sera déterminée par le film 50.

Il faut noter que l'observateur voit les aiguilles et les index fixés sur le cadran avec leur couleur propre et non altérée, puisque la couleur de fond est donnée par réflexion en arrière de ceux-ci.

Il va de soi que la cellule électro-optique 28 peut être d'un autre type, pourvu que dans un premier état de commutation elle soit transparente et que dans un deuxième état de commutation elle soit réfléchissante ou diffusante.

On pourra également choisir d'autres types de cellules à cristaux liquides, par exemple des cellules de type PDLC inverse, à gel nématique et structure cholestérique, à diffusion dynamique, du type à texture cholestérique stabilisée par polymère, plus connue sous sa dénomination anglo-saxonne "Polymer stabilized cholesteric texture" (PSCT), ou encore des cellules électrolytiques ou des cellules électrochromiques.

La structure et le fonctionnement de ces types de cellules sont bien connus de l'homme du métier et ne seront pas décrits davantage.

Pour une description complète de la structure et du fonctionnement d'une cellule du type à gel nématique et texture cholestérique, on se référera, par exemple, aux brevets US 5 188 760 et EP 0 451 905.

Pour une description complète de la structure et du fonctionnement d'une cellule de type à cristaux liquides dispersés dans un polymère (PDLC), on se référera par exemple au brevet US 4 435 047. On notera à ce propos que l'on choisira une cellule du type PDLC inverse si l'on souhaite obtenir une cellule transparente dans l'état non commuté, et opaque et réfléchissante dans l'état commuté.

Pour une description complète de la structure et du fonctionnement d'une cellule de type à diffusion dynamique, on se référera par exemple au volume 1 de l'ouvrage intitulé "Liquid Crystals Applications and Uses" édité par B. Bahadur, aux pages 196-227.

Tous les types de cellules d'affichage susmentionnés peuvent bien entendu être adressés passivement par un réseau d'électrodes matriciel, ou encore adressés activement par des éléments non linéaires tels que des transistors en couches minces (TFT, Thin Film Transistors; MIM, Metal Insulator Metal), ou des diodes.

Pour une description complète de la structure et du fonctionnement d'une cellule du type PSCT, on se référera par exemple au brevet US 5 437 811.

Pour une description complète de la structure et du fonctionnement d'une cellule du type électrolytique, on se référera par exemple à la publication de J. Duchêne et al. intitulée "Electrolytic Display", publiée dans SID 1978, pages 34 à 37. On notera qu'une telle cellule est transparente dans l'état non commuté, et opaque et réfléchissante dans l'état commuté.

Pour des exemples de différents types de cellules électrochromiques, on se référera à l'ouvrage "Large-Area Chronogenics : Materials and Devices for Transmittance Control", C.M. Lampert et C.G. Granqvist, Editors, Part 9 : Electrochromic Devices, pages 414 à 549, SPIE Optical Engineering Press, 1990.

L'ensemble d'affichage selon l'invention permet donc, en fonction de l'état de commutation et du type de la cellule électro-optique, d'obtenir différentes configurations d'affichage tout en produisant de l'électricité au moyen de la cellule photovoltaïque.

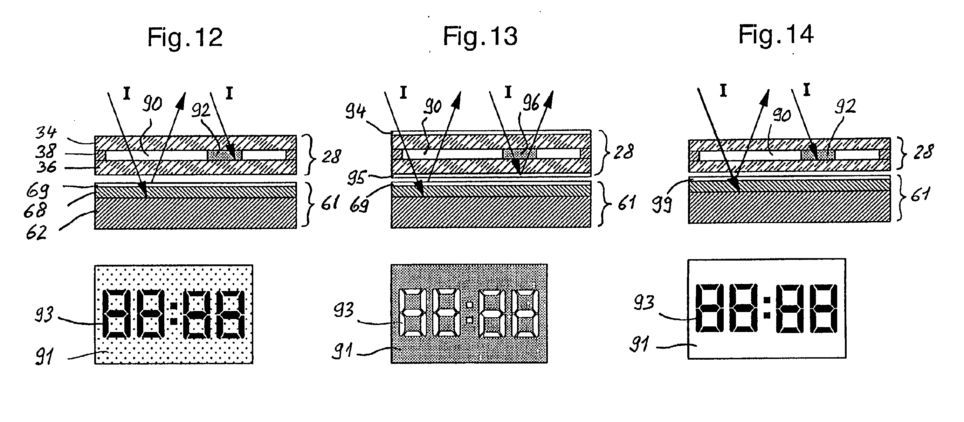

En se référant maintenant aux figures 12 à 14, on décrira trois autres exemples d'ensembles d'affichage selon l'invention et l'on indiquera la proportion de la lumière incidente qui atteint la photodiode. Il faut noter qu'il n'y a pas d'organes d'affichage analogique dans ces cas.

Dans la structure selon la figure 12, la cellule électro-optique 28 et la cellule photovoltaïque 61 peuvent être du même type que ceux décrits en référence aux figures 1 à 7. Toutefois, de préférence afin de transmettre un maximum de lumière, la cellule électro-optique est une cellule d'un type sans polariseurs, par exemple une cellule électrochromique, et la cellule photovoltaïque est du type représenté à la figure 5. Les flèches montrent que la lumière incidente I, après avoir traversé les régions transparentes 90 de la cellule électro-optique 28, est partiellement réfléchie sur la cellule photovoltaïque 61 pour former un fond d'affichage 91 coloré, tandis qu'elle est absorbée dans les régions non transparentes 92 formant des caractères 93 affichés en noir.

Bien entendu, il est possible d'obtenir le même aspect de l'affichage si la cellule électro-optique est une cellule classique à cristaux liquides de type TN ou STN, pourvue de deux polariseurs linéaires non réflectifs, mais une telle cellule laisse passer moins de lumière à cause de l'absorption inhérente aux polariseurs, ce qui réduit l'énergie électrique fournie par la cellule photovoltaïque.

Dans une structure analogue à celle de la figure 12, il serait possible d'utiliser un autre type de cellule électro-optique sans polariseurs, en particulier une cellule à cristaux liquides du type gel nématique. Toutefois dans celle-ci les régions non transparentes 92 sont diffusantes, de sorte que les caractères 93 seraient blancs comme dans le dessin inférieur de la figure 13.

Dans la structure selon la figure 13, la cellule électro-optique à cristaux liquides 28 est d'un type comportant un polariseur avant 94 et un polariseur arrière réflectif 95 qui donne une couleur spécifique, de préférence claire, aux caractères 93 formés par les régions 96 se trouvant dans le deuxième état de commutation. Ainsi, les caractères 93 apparaissent en couleur claire sur un fond 91 ayant de préférence une couleur foncée, c'est-à-dire qu'une faible proportion de la lumière incidente doit se réfléchir sur la cellule photovoltaïque 61.

Dans la structure selon la figure 14, la cellule électro-optique 28 peut être de l'un quelconque des types mentionnés en référence aux figures 12 et 13. Par contre la cellule photovoltaïque 61 est d'un type dont l'électrode supérieure 99 est formée d'une couche métallique transflective, c'est-à-dire semi-transparente et semi-réfléchissante. Des cellules de ce genre sont décrites dans la demande de brevet EP 0 872 783 et peuvent fournir une réflexion colorée de la lumière incidente, notamment si l'électrode est faite d'un métal tel que l'or ou le cuivre ou si elle est revêtue d'une couche protectrice colorée. Cette réflexion donne au fond 91 un aspect métallique clair, tandis que les caractères 93 peuvent être d'une autre couleur ou noirs comme dans les cas de la figure 12.

Le tableau ci-dessous indique des valeurs typiques de la part A de la lumière incidente I qui peut être absorbée par la cellule photovoltaïque dans différents cas correspondant aux figures 12 et 14, en fonction de différents coefficients de transmission T des composants. La colonne LCD type 1 correspond à une cellule à cristaux liquides courante pourvue de polariseurs linéaires ordinaires. La colonne LCD type 2 correspond à une cellule à cristaux liquides courante sans polariseurs, par exemple à gel nématique. Le cas du filtre réflectif multicouche est celui de la courbe 82 de la figure 8, donnant par réflexion un fond bleu violacé, avec un agencement selon la figure 12. Le cas du miroir métallique est basé sur 30% de transmission à travers le miroir et correspond à l'agencement selon la figure 14.

| Réflecteur | LCD type 1 | LCD type 2 |
|---|---|---|
| | T ≈0,4 | T ≈0,85 |
| Filtre réflectif multicouche, T ≈0,8 | A ≈0,32 | A ≈0,68 |
| Miroir métallique semi-transparent, T ≈0,3 | A ≈0,12 | A ≈0,26 |

Les exemples donnés ci-dessus montrent que la présente invention fournit à un homme du métier des moyens pour concevoir des ensembles, comprenant un affichage à cristaux liquides ou autre et une cellule ou une batterie de cellules photovoltaïques, ayant une structure la plus simple possible et un rendement suffisant, tout en présentant une couleur prédéterminée et plaisante. Ces ensembles d'affichage sont utilisables avantageusement dans des appareils portables dont l'esthétique est un paramètre important, notamment des montres, ou plus généralement dans des appareils tels que des calculatrices, des téléphones, des assistants personnels ou des panneaux d'affichage électriques.

## Revendications

1. Ensemble d'affichage comportant, d'une part une cellule photovoltaïque (61) comprenant elle-même une électrode supérieure (69, 99) et, d'autre part une cellule électro-optique (28) disposée devant ladite électrode supérieure de la cellule photovoltaïque et capable de présenter des régions transparentes pour transmettre de la lumière incidente à la cellule photovoltaïque, la cellule photovoltaïque (61) étant agencée pour réfléchir des longueurs d'ondes visibles prédéterminées de la lumière transmise à travers la cellule électro-optique (28), de sorte que la cellule photovoltaïque forme un réflecteur coloré derrière la cellule électro-optique, **caractérisé en ce que** la réflexion desdites longueurs d'ondes prédéterminées est soit une réflexion interférentielle par un filtre réflectif multicouche comprenant ladite électrode supérieure lorsque ladite électrode supérieure est transparente (69), soit une réflexion obtenue part ladite électrode supérieure lorsque ladite électrode supérieure est métallique et semi-transparente (99).

2. Ensemble d'affichage selon la revendication 1, **caractérisé en ce que** la cellule électro-optique (28) est une cellule à cristaux liquides.

3. Ensemble d'affichage selon la revendication 1, **caractérisé en ce que** la cellule électro-optique (28) est du type électrochromique ou du type électrolytique.

4. Ensemble d'affichage selon la revendication 1, **caractérisé en ce que** la cellule électro-optique (28) comporte des moyens (48, 50) pour fournir une réflexion colorée de la lumière incidente dans ses zones non transparentes.

5. Ensemble d'affichage selon l'une quelconque des revendications 1 à 4, **caractérisé en ce que**, lorsque ladite électrode supérieure est transparente, la cellule photovoltaïque comporte un réflecteur inférieur, formé par un substrat réfléchissant (62) ou une électrode inférieure réfléchissante (63), et une partie active de photodiode (68) formée de matériau semi-conducteur ayant un indice de réfraction réel plus grand que celui de ladite électrode supérieure (69).

6. Ensemble d'affichage selon la revendication 5, **caractérisé en ce que** le matériau semi-conducteur est du silicium amorphe hydrogéné.

7. Ensemble d'affichage selon la revendication 6, **caractérisé en ce que** la partie active de photodiode (68) en silicium a une épaisseur (e₂) comprise entre 100 et 600 nm et l'électrode supérieure (69) a une épaisseur (e₁) comprise entre 60 et 300 nm, les combinaisons deux à deux de ces épaisseurs conduisant à une couleur déterminée de la lumière réfléchie (74).

8. Ensemble d'affichage selon la revendication 7, **caractérisé en ce que** la partie active de photodiode (68) en silicium a une épaisseur (e₂) comprise entre 250 et 450 nm et l'électrode supérieure (69) a une épaisseur (e₁) comprise entre 70 et 150 nm.

9. Ensemble d'affichage selon l'une des revendications 1 à 8, **caractérisé en ce que**, lorsque ladite électrode supérieure est transparente, ladite électrode supérieure (69) est recouverte d'une couche de laque (76, 78) transparente ou faiblement diffusante.

10. Ensemble d'affichage selon la revendication 9, **caractérisé en ce que** ladite couche de laque (78) contient des colorants ou des pigments.

11. Ensemble d'affichage selon l'une des revendications précédentes, **caractérisé en ce qu'**il comporte des organes d'affichage analogique (12, 14, 16) placés devant la cellule électro-optique ou entre celle-ci et la cellule photovoltaïque.

## Patentansprüche

1. Anzeigeanordnung, die einerseits eine photovoltaische Zelle (61) die selbst eine obere Elektrode (69, 99) aufweist und andererseits eine elektrooptische Zelle (28) aufweist, die vor der besagten oberen Elektrode der photovoltaischen Zelle angeordnet ist und zur Darstellung transparenter Abschnitte ausgebildet ist, um einfallendes Licht an die photovoltaische Zelle weiterzugeben, wobei die photovoltaische Zelle (61) dazu ausgestaltet ist, vorgegebene sichtbare Wellenlängen des durch die elektrooptische Zelle (28) transmittierten Lichts derart zu reflektieren, dass die photovoltaische Zelle einen farbigen Reflektor hinter der elektrooptischen Zelle bildet, **dadurch gekennzeichnet, dass** die Reflektion der vorgegebenen Wellenlängen ist entweder eine Interferenzreflektion durch einen mehrschichtigen Reflektionsfilter, welcher die besagte obere Elektrode aufweist, wenn die besagte obere Elektrode transparent ist oder eine Reflektion von der besagten oberen Elektrode ist, wenn die obere Elektrode metallisch und semitransparent (99) ist.

2. Anzeigeanordnung nach Anspruch 1, **dadurch gekennzeichnet, dass** die elektrooptische Zelle (28) eine Flüssigkristallzelle ist.

3. Anzeigeanordnung nach Anspruch 1, **dadurch gekennzeichnet, dass** die elektrooptische Zelle (28) eine elektrochemische oder eine elektrolytische Zelle ist.

4. Anzeigeanordnung nach Anspruch 1, **dadurch gekennzeichnet, dass** die elektrooptische Zelle (28) Mittel (48, 50) aufweist, um eine farbige Reflektion des einfallenden Lichts in seinen nicht transparenten Bereichen bereit zu stellen.

5. Anzeigeanordnung nach einem der Ansprüche 1 bis 4, **dadurch gekennzeichnet, dass** wenn die besagte obere Elektrode transparent ist die photovoltaische Zelle einen unteren Reflektor aufweist, welcher von einem reflektierenden Substrat (62) oder von einer unteren reflektierenden Elektrode (63) gebildet ist und einen aktiven Fotodiodenabschnitt (68) aufweist, der aus Halbleitermaterial gebildet ist, welches einen reellen Refraktion index aufweist, der größer als derjenige der oberen Elektrode (69) ist.

6. Anzeigeanordnung nach Anspruch 5, **dadurch gekennzeichnet, dass** das Halbleitermaterial amorphes Siliziumhydrat ist.

7. Anzeigeanordnung nach Anspruch 6, **dadurch gekennzeichnet, dass** der aktive Fotodiodenabschnitt (68) aus Silizium eine Dicke (e₂) zwischen 100 und 600 nm und die obere Elektrode (69) eine Dicke (e₁) zwischen 60 und 300 nm aufweist und zwei Kombinationen der Dicken zu einer bestimmten Farbe des reflektierten Lichts (74) führen.

8. Anzeigeanordnung nach Anspruch 7, **dadurch gekennzeichnet, dass** der aktive Fotodiodenabschnitt (68) aus Silizium eine Dicke (e₂) zwischen 250 und 450 nm und die obere Elektrode (69) eine Dicke (e₁) zwischen 70 und 150 nm aufweist.

9. Anzeigeanordnung nach einem der Ansprüche 1 bis 8 **dadurch gekennzeichnet, dass** wenn die obere Elektrode transparent ist, die besagte untere Elektrode (69) mit einer transparenten oder schwach streuenden Lackschicht (76, 78) bedeckt ist.

10. Anzeigeanordnung nach Anspruch 9, **dadurch gekennzeichnet, dass** die Lackschicht (78) Farbstoffe oder Pigmente enthält.

11. Anzeigeanordnung nach einem der vorhergehenden Ansprüche, **dadurch gekennzeichnet, dass** sie analoge Anzeigeglieder (12, 14, 16) aufweist, die vor der elektrooptischen Zelle oder zwischen dieser und der photovoltaische Zelle platziert sind.

## Claims

1. Display assembly including on the one hand a photovoltaic cell (61) including itself a top electrode (69, 99) and, on the other hand, an electro-optical cell (28) arranged in front of said top electrode of the photovoltaic cell and capable of having transparent regions for transmitting the incident light to the photovoltaic cell, the photovoltaic cell (61) being arranged to reflect predetermined visible wavelengths of the light transmitted through the electro-optical cell (28), so that the photovoltaic cell forms a coloured reflector behind the electro-optical cell, **characterised in that** the reflection of said predetermined wavelengths is either an interferential reflection via a multi-layered reflective filter including said top electrode (69) when said top electrode is transparent, or a reflection obtained with said top electrode when said top electrode is metallic and semi-transparent.

2. Display assembly according to claim 1, **characterised in that** the electro-optical cell (28) is a liquid crystal cell.

3. Display assembly according to claim 1, **characterised in that** the electro-optical cell (28) is of the electrochromic type or the electrolytic type.

4. Display assembly according to claim 1, **characterised in that** the electro-optical cell (28) includes means (48, 50) for providing a coloured reflection of the incident light in its non transparent zones.

5. Display assembly according to any of claims 1 to 4, **characterised in that**, when the top electrode is transparent, the photovoltaic cell includes a bottom reflector, formed by a reflective substrate (62) or a bottom reflective electrode (63), and an active photodiode part (68) formed of semiconductor material having a greater real refractive index than that of said top electrode (69).

6. Display assembly according to claim 5, **characterised in that** the semiconductor material is hydrogenated amorphous silicon.

7. Display assembly according to claim 6, **characterised in that** the active silicon photodiode part (68) has a thickness (e₂) comprised between 100 and 600 nm and the top electrode (69) has a thickness (e₁) comprised between 60 and 300 nm, the pairing of said thicknesses leading to a determined colour of the reflected light (74).

8. Display assembly according to claim 7, **characterised in that** the active photodiode part (68) made of silicon has a thickness (e₂) comprised between 250 and 450 nm and the top electrode (69) has a thickness (e₁) comprised between 70 and 150 nm.

9. Display assembly according to any of claims 1 to 8, **characterised in that**, when said top electrode is transparent, said top electrode (69) is covered with a transparent or slightly diffusing lacquer layer (76, 78).

10. Display assembly according to claim 9, **characterised in that** said lacquer layer (78) contains dyes or pigments.

11. Display assembly according to any of the preceding claims, **characterised in that** it includes analogue display members (12, 14, 16) placed in front of the electro-optical cell or between the latter and the photovoltaic cell.
